**Europäisches Patentamt**

**European Patent Office**

**Office européen des brevets**

(19)

(11) Publication number: **0 080 368**
**B1**

(12) # EUROPEAN PATENT SPECIFICATION

(45) Date of publication of patent specification: **06.05.87**

(51) Int. Cl.⁴: **G 01 J 5/00**

(21) Application number: **82306228.6**

(22) Date of filing: **23.11.82**

(54) **Temperature measurement in the presence of ambient radiation.**

(30) Priority: **25.11.81 US 324982**

(43) Date of publication of application:
**01.06.83 Bulletin 83/22**

(45) Publication of the grant of the patent:
**06.05.87 Bulletin 87/19**

(84) Designated Contracting States:
**BE CH DE FR GB IT LI NL**

(56) References cited:
**EP-A-0 014 624**
**US-A-3 370 151**

(73) Proprietor: **Exxon Research and Engineering Company**
**P.O.Box 390 180 Park Avenue**
**Florham Park New Jersey 07932 (US)**

(72) Inventor: **Stein, Alexander**
**610 Sanderling Court**
**Secaucus New Jersey (US)**

(74) Representative: **Pitkin, Robert Wilfred et al**
**ESSO Engineering (Europe) Ltd. Patents & Licences Apex Tower High Street**
**New Malden Surrey KT3 4DJ (GB)**

# Description

The present invention relates to remote temperature measurements of hot samples.

The temperature of hot samples can be inferred from its spectral radiance at one particular wavelength if the spectral emissivity is known or from a value of spectrally integrated radiance if a spectrally averaged effective emissivity is known. However, if the sample is exposed to intense ambient radiation the thermal radiance will be partially obscured by a portion of the ambient radiation reflected off the sample.

Such a situation is encountered in the radiation section of fired furnaces. The present invention is concerned with separating the ambient radiation reflected off the sample from the thermal radiation emitted by the sample. It is then possible to obtain a true physical temperature of the sample.

According to the invention there is provided a method for remotely measuring the temperature of a sample in the presence of ambient radiation reflected off the sample, by observing its radiant emittance of about a given wavelength, characterised by:

(a) providing on a portion of said sample a surface area of spectral emissivity different from that of the adjacent surface areas of said sample at about said given wavelength;

(b) measuring the apparent spectral radiance from the first-mentioned surface area with a radiometer at about said given wavelength;

(c) measuring the apparent spectral radiance from an adjacent surface area of said sample with a radiometer at about said given wavelength;

(d) obtaining the spectral emissivities of said first-mentioned and adjacent surface areas of said sample; and

(e) computing said temperature of said sample from the said radiances and emissivities of said first-mentioned and adjacent surface areas.

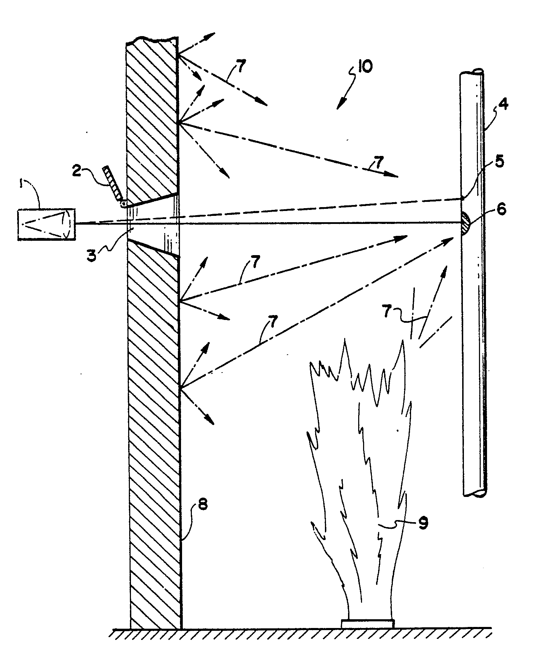

The invention will be more fully understood from the following description, given by way of example, which refers to the accompanying drawings in which the sole figure shows one preferred arrangement for practising the invention.

For the purpose of remotely measuring the temperature of a hot sample in the presence of intense ambient radiation, a portion of the sample surface is treated to change its emissivity for a selected wavelength or wavelength range. By a measurement of the spectral radiances from the treated and untreated (hot) surface areas one can determine the equivalent blackbody radiance for the sample temperature (and thus the temperature) provided that the spectral emissivities for the treated and untreated surface areas are known.

A general requirement of this technique is that the surface temperature of the treated and untreated areas are at least approximately equal. Thermal conduction and convection tend to equalise the temperature over the surface, but a certain temperature gradient remains due to an emissivity-dependent difference in the radiative heating rate. In order to minimise the temperature gradient it is preferable to select a surface treatment that renders the treated area about equal in total emissivity to that of the untreated surface, but different in spectral emissivity at about a selected wavelength.

The surface treatment can be done by painting or coating with refractory materials, etching, sandblasting or any other treatment to modify the spectral emissivity. Alternatively, one could attach a separate body of different emissivity in close thermal contact with the sample.

A small spot on the surface of the sample is painted with a refractory material that has a different spectral emissivity at a particular wavelength or wavelength range from the unpainted surface of the sample. As discussed above, one selects the paint such that its total emissivity is approximately equal to that of the unpainted surface, but different at the particular wavelength to provide for equal radiative heating at the painted and unpainted portions of the sample. Such paints include mixtures of TaC or NbB powder with $Al_2O_3$ or $SiO_2$ powder. A paint formulated in this fashion exhibits a relatively low emissivity in the wavelength range of 1—3 m. Above and below this range the emissivity increases towards unity. The pyrometer measurement would be made in the 1 to 3 m range. The effective total emissivity can be adjusted by varying the mixture and the thickness of the painted layer.

Using two relations:

$$R = \varepsilon R_B(T) + (1-\varepsilon)R_A$$

$$R' = \varepsilon' R_B(T) + (1-\varepsilon')R_A$$

where R and R′ are the apparent spectral radiances at about a selected wavelength for the unpainted and painted portions of the sample; $\varepsilon$ and $\varepsilon'$ are the respective emissivities at about the selected wavelength; $R_B(T)$ is the spectral radiance of a blackbody at the temperature T; and $R_A$ is the ambient spectral radiance to which the sample area of interest is exposed. By combining the above equations one gets for the blackbody radiance at temperature T:

$$R_B(T) = \frac{R(1-\varepsilon') + R'(1-\varepsilon)}{\varepsilon - \varepsilon'}$$

from which the temperature T is obtained via the Planck radiation formula.

The spectral emissivities of the treated and untreated portions of the surface of the sample must be known at the particular wavelength or wavelength range. A standard technique for determining spectral emissivity involves heating of a representative sample to a precisely determined temperature and measurement of its spectral radiance. The ratio of that radiance to the blackbody spectral radiance at the above temperature is the spectral emissivity.

For purposes of description, one way of putting the present invention into effect shall be illustrated and described with respect to a fired refinery furnace. The figure shows such a typical arrangement. To measure the temperature T of a metal tube 4 placed inside a fired furnace 10 where the tube 4 is exposed to ambient radiation 7 from the flames 9 and the furnace wall 8 one paints a small spot 6 on the tube 4 with a refractory material. The spectral emissivity $\varepsilon'$, of the refractory paint is different from the spectral emissivity, $\varepsilon$, of the unpainted tube at about the wavelength of observation. To distinguish between the thermal emission from the tube and the ambient radiation reflected off the tube one aims a radiometer (pyrometer), 1 alternatingly at the painted spot 6 and an adjacent point 5 on the unpainted surface measuring the respective spectral radiances R' and R at about a selected wavelength. Knowing the values $\varepsilon$, $\varepsilon'$, R, and R' one can calculate the blackbody radiance $R_B(T)$ for the sample temperature T from the above equation; and the temperature itself then from $R_B(T)$ using Planck's well known radiation formula.

## Claims

1. A method for remotely measuring the temperature of a sample (4) in the presence of ambient radiation reflected off the sample by observing its radiant emittance at about a given wavelength, characterised by:

(a) providing on a portion of said sample (4) a surface area (6) of spectral emissivity ($\varepsilon'$) different from that of the adjacent surface areas of said sample at about said given wavelength;

(b) measuring the apparent spectral radiance (R') from the first-mentioned surface area (6) with a radiometer (1) at about said given wavelength;

(c) measuring the apparent spectral radiance (R) from an adjacent surface area (5) of said sample (4) with a radiometer (1) at about said given wavelength;

(d) obtaining the spectral emissivities ($\varepsilon'$, $\varepsilon$) of said first-mentioned and adjacent surface areas (6, 5) of said sample (4); and

(e) computing said temperature of said sample from the said radiances (R', R) and emissivities ($\varepsilon'$, $\varepsilon$) of said first-mentioned and adjacent surface areas (6, 5).

2. A method as claimed in claim 1, characterised in that the surface area (6) of different spectral emissivity ($\varepsilon'$) is provided on a portion of said sample by a treatment which consists of applying a refractory paint.

3. A method as claimed in either one of the preceding claims, characterised in that the surface area (6) of different spectral emissivity ($\varepsilon'$) is selected to have an effective total emissivity about equal to that of the unpainted material while exhibiting a different spectral emissivity from that of said unpainted material at said wavelength.

4. A method as claimed in claim 2 or 3 as appended to claim 2, characterised in that said refractory paint consists of a mixture of TaC and $Al_2O_3$.

5. A method as claimed in claim 2 or claim 3 or 4 as appended to claim 2, characterised in that said refractory paint consists of a mixture of Tac and $SiO_2$.

6. A method as claimed in claim 2 or claim 3 or 4 as appended to claim 2, characterised in that said refractory paint consists of a mixture of NbB and $Al_2O_3$.

7. A method as claimed in claim 2 or claim 3 or 4 as appended to claim 2 characterised in that said refractory paint consists of a mixture of NbB and $SiO_2$.

## Patentansprüche

1. Verfahren zur Fernmessung der Temperatur einer Probe (4) in Anwesenheit einer Umgebungsstrahlung, die von der Probe reflektiert wird, durch Beobachtung ihrer Strahlungsausgabe bei etwa einer vorgegebenen Wellenlänge, durch:

(a) Vorsehen eines Teils der Probe (4) auf einem Oberflächenbereich (6) von spektraler Emissionsfähigkeit ($\varepsilon'$), die sich von derjenigen von benachbarten Oberflächenbereichen der Probe bei etwa der gegebenenen Wellenlänge unterscheidet;

(b) Messen der scheinbaren spektralen Helligkeit (R') von dem zuerst erwähnten Oberflächenbereich (6) mit einem Radiometer (1) bei etwa der gegebenen Wellenlänge;

(c) Messen der scheinbaren spektralen Helligkeit (R) von einem benachbarten Oberflächenbereich (5) der Probe (5) mit einem Radiometer (1) bei etwa der gegebenen Wellenlänge;

(d) Bestimmung des spektralen Emissionsvermögens ($\varepsilon'$, $\varepsilon$) des zuerste erwähnten und des benachbarten Oberflächenbereichs (6, 5) der Probe (4); und

(e) Berechnen der Temperatur der Probe aus den Helligkeiten (R', R) und dem Emissionsvermögen ($\varepsilon'$, $\varepsilon$) des zuerst erwähnten und des benachbarten Oberflächenbereichs (6, 5).

2. Verfahren nach Anspruch 1, dadurch gekennzeichnet, daß der Oberflächenbereich (6) von unterschiedlichem spektralen Emissionsvermögen ($\varepsilon'$) als ein Teil der Probe durch eine Behandlung vorgesehen ist, welche aus dem Aufbringen einer feuerfesten Farbe besteht.

3. Verfahren nach einem der vorhergehenden Ansprüche, dadurch gekennzeichnet, daß der Oberflächenbereich (6) von unterschiedlichem spektralen Emissionsvermögen ($\varepsilon'$) so ausgewählt ist, daß er ein effektives totales Emissionsvermögen von etwa dem des unangestrichenen Materials hat, während er ein spektrales Emissionsvermögen entwickelt, das sich von dem unangestrichenen Material bei der Wellenlänge unterscheidet.

4. Verfahren nach Anspruch 2 oder 3 in Verbindung mit Anspruch 2, dadurch gekennzeichnet, daß die feuerfeste Farbe aus einer Mischung aus TaC und $Al_2O_3$ besteht.

5. Verfahren nach Anspruch 2, 3 oder 4 in Abhängigkeit von Anspruch 2, dadurch gekennzeichnet, daß die feuerfeste Farbe aus einer Mischung von TaC und SiO$_2$ besteht.

6. Verfahren nach Anspruch 2, 3 oder 4 in Abhängigkeit von Anspruch 2, dadurch gekennzeichnet, daß die feuerfeste Farbe aus einer Mischung von NbB und Al$_2$O$_3$ besteht.

7. Verfahren nach Anspruch 2, 3 oder 4 in Abhängigkeit von Anspruch 2, dadurch gekennzeichnet, daß die feuerfeste Farbe aus einer Mischung von NbB und SiO$_2$ besteht.

**Revendications**

1. Un procédé pour la mesure à distance de la température d'un échantillon (4) en présence d'un rayonnement ambiant réfléchi par l'échantillon en observant son pouvoir rayonnant aux environs d'une longueur d'onde donnée, caractérisé en ce que

a) il est prévu, sur une portion dudit échantillon (4), une aire (6) d'émissivité spectrale (ε') différente de celle des aires voisines dudit échantillon aux environs de la longueur d'onde donnée;

b) on mesure la radiance spectrale apparente (R') à partir de l'aire citée en premier (6) avec un radiomètre (1) aux environs de la longueur d'onde donnée;

c) on mesure la radiance spectrale apparente (R) à partir d'une aire voisine (5) dudit échantillon (4) avec un radiomètre (1) aux environs de la longueur d'onde donnée;

d) on obtient les émissivités spectrales (ε', ε) des aires citée en premier et voisine (5, 6) de l'échantillon (4) et

e) on calcule la température dudit échantillon à partir des radiances (R', R) et émissivités (ε', ε) des aires citée en premier et voisine (6, 5).

2. Procédé selon la revendication 1, caractérisé en ce que l'on produit l'aire (6) d'émissivité spectrale différente (ε') sur une partie dudit échantillon par un traitement qui consiste en l'application d'une peinture réfractaire.

3. Procédé selon l'une ou l'autre des revendications précédentes, caractérisé en ce que l'aire (6) d'émissivité spectrale (ε') différente est choisie de manière à avoir une émissivité totale effective sensiblement égale à celle du matériau non peint, tout en présentant une émissivité spectrale différente de celle du matériau non peint à ladite longueur d'onde.

4. Procédé selon la revendication 2 ou la revendication 3 rattachée à la revendication 2, caractérisé en ce que ladite peinture réfractaire consiste en un mélange de TaC et d'Al$_2$O$_3$.

5. Procédé selon la revendication 2 ou la revendication 3 ou 4 rattachée à la revendication 2, caractérisé en ce que ladite peinture réfractaire consiste en un mélange de TaC et de SiO$_2$.

6. Procédé selon la revendication 2 ou la revendication 3 ou 4 rattachée à la revendication 2, caractérisé en ce que ladite peinture réfractaire consiste en un mélange de NbB et d'Al$_2$O$_3$.

7. Procédé selon la revendication 2 ou la revendication 3 ou 4 rattachée à la revendication 2, caractérisé en ce que ladite peinture réfractaire consiste en un mélange de NbB et de SiO$_2$.